# NEUE EUROPÄISCHE PATENTSCHRIFT

(11) **EP 1 848 918 B2**
(45) Veröffentlichungstag und Bekanntmachung des Hinweises auf die Entscheidung über den Einspruch: **17.07.2013**
(45) Hinweis auf die Patenterteilung: 17.06.2009
(21) Anmeldenummer: 06706629.0
(22) Anmeldetag: 03.02.2006
(51) Int. Cl.: F21V 5/00, F21V 3/04

(54) **BELEUCHTUNGSVORRICHTUNG**
ILLUMINATION DEVICE
DISPOSITIF D'ECLAIRAGE

(30) Priorität: 03.02.2005 DE 102005004931
(43) Veröffentlichungstag der Anmeldung: 31.10.2007
(73) Patentinhaber: Albis Plastic GmbH, 20531 Hamburg (DE)
(72) Erfinder: FLEHINGHAUS, Michael, 21465 Reinbeck (DE); TEITGE, Andreas, 21079 Hamburg (DE)
(74) Vertreter: Knoop, Philipp
(86) Internationale Anmeldenummer: PCT/EP2006/000967
(87) Internationale Veröffentlichungsnummer: WO 2006/082081

(56) Entgegenhaltungen:
- EP-A1- 1 197 765
- EP-A1- 1 279 890
- WO-A-03/087656
- WO-A1-01//83255
- WO-A1-2005//093477
- WO-A1-2006//082081
- DE-A1- 10 032 509
- DE-A1- 19 620 659
- DE-T2- 69 419 968
- DE-U1- 29 622 671
- DE-U1- 29 920 234
- JP-A- 10 036 655
- JP-A- 11 038 232
- JP-A- 2000 294 020
- JP-A- 2001 250 410
- US-A- 4 191 943
- US-A1- 2004 223 224
- US-A1- 2005 052 885
- US-A1- 20010 028 560
- US-A1- 20020 093 829
- US-B1- 6 348 960
- US-B1- 6 464 382

## Beschreibung

Die vorliegende Erfindung betrifft eine Beleuchtungsvorrichtung mit mindestens einer Lichtquelle und mindestens einem Streumittel.

Derartige Beleuchtungsvorrichtungen sind weit verbreitet. Beispielsweise finden solche Beleuchtungsvorrichtungen bei Kraftfahrzeugen Verwendung, wo sie etwa die Form einer Rückleuchte oder eines Hauptscheinwerfers einnehmen. In der Rückleuchte oder dem Hauptscheinwerfer befinden sich in der Regel mindestens das Rücklicht sowie zusätzlich beispielsweise das Bremslicht. In letzter Zeit geht ein Designtrend dahin, auch beispielsweise das Blinklicht in die Rückleuchte zusammen mit der Rückleuchte und dem Bremslicht und/oder beispielsweise das Blinklicht in den Hauptscheinwerfer zu integrieren.

Bei einer Art der herkömmlichen Beleuchtungsvorrichtungen mit mehreren Lichtquellen ist beispielsweise durch eine Klarglasoptik die Sicht auf alle dahinterliegenden Bauteile uneingeschränkt möglich. Jedoch wird beispielsweise von Designern von Fahrzeugleuchten wie zum Beispiel Hauptscheinwerfern, Blinkleuchten und/oder Rückleuchten häufig die Forderung gestellt, daß diese nach außen eine einheitliche Erscheinung aufweisen. Dementsprechend ist es unerwünscht, daß bei in den Hauptscheinwerfer zu integrierenden verschiedenfarbigen Leuchten - also zum Beispiel einem gelben Blinklicht und einem farblosen Abblendlichtdieser Farbunterschied von außen erkennbar ist, wenn keine der beiden Leuchten eingeschaltet ist. Um beispielsweise Leuchten mit mehreren Lichtquellen, wie zum Beispiel Leuchten für die Allgemeinbeleuchtung, Hauptscheinwerfer, Blinker und/oder Rückleuchten für Fahrzeuge oder andere Leuchten anzugeben, bei denen die Sicht auf alle dahinterliegenden Bauteile nicht möglich ist, sind daher seit langem Leuchten mit Schweinwerferabdeckungen im Einsatz, welche eine Prismierung oder Ähnliches an der Aus- oder Eintrittsfläche aufweisen. Durch die prismierte Oberfläche wird gerichtete Lichtstrahlung aus jeder Lichtquellen je nach dem, an welcher Stelle der Oberfläche die Lichtstrahlung auf die Scheinwerferabdeckung trifft, in unterschiedliche Richtungen gebrochen und/oder reflektiert. Auf diese Weise wird die gerichtete Lichtstrahlung in überwiegend diffuse Lichtstrahlung umgewandelt. Hierdurch wird zum einen erreicht, daß die Sicht auf hinter der Scheinwerferabdeckung liegende Bauteile nicht möglich ist, zum anderen wird erreicht, daß bei Betrieb der Lichtquellen diese nach außen weitgehend als eine einzige homogene Lichtquelle erscheinen. Hingegen ist an der Verwendung von prismierten Scheinwerferabdeckungen nachteilig, daß deren Herstellung aufwendig ist, da eine bestimmte Oberflächenstruktur beim Guß aufgeprägt werden muß. Außerdem ist in vielen Fällen aus Designaspekten eine prismierte Scheinwerferabdeckung nicht gewünscht, da beispielsweise eine einheitliche Erscheinung von Scheinwerfer und Karosserie bevorzugt wird.

Eine verbesserte Form einer gattungsgemäßen Beleuchtungsvorrichtung ist in der DE 198 18 009 C2 offenbart. In dieser Schrift ist eine Mehrschicht-Abdeckung für Mehrfachfunktions-Heckleuchten für Straßenfahrzeuge beschrieben. Dabei besteht die Abdeckung im wesentlichen aus einer drei-dimensional verformten Kunststoffolie und wenigstens einer Verstärkungsschicht aus Kunststoff, die an die drei-dimensional verformte Kunststoffolie angespritzt worden ist. Kennzeichen dieser bekannten Abdeckung ist, daß die Kunststoffolie als Streulichtscheibe ausgebildet ist. Hierdurch soll die fabrikationstechnisch aufwendige Erzeugung einstückig angeformter, lichtstreuender optischer Elemente an der Innenfläche herkömmlicher Lichtscheiben vermieden werden. Die Streulichtscheibe kann dabei entsprechend der Offenbarung beispielsweise aus Polycarbonat bestehen, in welches Voll- oder Hohlkugeln in Form von homogen dispergierten Streupigmenten eingelagert sind. Die in dieser Schrift offenbarte Abdeckung ist insofern eine Verbesserung der im vorhergehenden Abschnitt beschriebenen prismierten Scheinwerferabdeckungen. Nachteilig an der in dieser Schrift offenbarten Vorrichtung ist aber, daß der vorgeschlagene mehrschichtige Aufbau wiederum aufwendig in der Herstellung ist, da ein Verfahren zur Erzeugung mehrschichtiger Strukturen erforderlich ist. Da laut dem Anspruch 4 der zitierten Schrift vorgeschlagen wird, daß die Schichtdicke der als Streulichtscheibe ausgebildeten Kunststoffolie eine Schichtdicke von 50 bis 700 µm aufweist, ist nachteilig zwingend das Aufbringen einer Verstärkungsschicht erforderlich zur Erreichung der für die Scheinwerferabdeckung nötigen Strukturfestigkeit. Der vorliegenden Erfindung liegt daher die Aufgabe zugrunde, eine Beleuchtungsvorrichtung mit mindestens einer Lichtquelle und mindestens einem Streumittel anzugeben, die einfach aufgebaut und kostengünstig herstellbar ist.

Dokument US 6 464 382 B1 offenabrt eine Beleuchtungsvorrichtung mit transparenten Streukörper die in einer transparenten Kunstoffmasse eingebettet sind.

Der vorliegenden Erfindung liegt daher die Aufgabe zugrunde, eineBeleuchtungsvorrichtung mit mindestens einer Lichtquelle und mindestens einem Streumittel anzugeben, mit der eine Homogenisierung des Lichts bezüglich der Abstrahlwinkel besonders gut erzielbar ist.

Der Vorteil dieser Lösung besteht darin, daß die transparente Kunststoffmasse die Funktion sowohl der Verstärkungsschicht als auch die Funktion der Streulichtscheibe hat. Auf diese Weise kann mit großem Vorteil mit lediglich einem Bauteil, welches aus der transparenten Kunststoffmasse mit eingebetteten transparenten Streukörpern besteht, eine Leuchte konstruiert werden, deren äußeres Gehäuseteil intrinsisch die Funktion der Lichtstreuung erfüllt. Bei Verwendung einer erfindungsgemäß konstruierten Beleuchtungsvorrichtung kann vorteilhaft die Anzahl der Lichtquellen verringert werden. Zum Beispiel kann mit der nicht erfindungsgemäßen Beleuchtungsvorrichtung bei Leuchten für die Allgemeinbeleuchtung Kfz-Hauptscheinwerfern, Blinkern und/oder Rückleuchten für Fahrzeuge, bei Industrieleuchten, bei beleuchteten Werbetafel, bei tiefgezogenen Leuchten wie zum Beispiel quadratische Platten beispielsweise mit Neonleuchten wie sie etwa auf Bahnhöfen eingesetzt werden, bei Langfeldleuchten oder anderen Leuchten, weiche durch eine Vielzahl von Leuchtdioden oder eine Vielzahl anderer Lichtquellen beleuchtet werden, eine geringere Anzahl an Leuchtdioden beziehungsweise sonstigen Lichtquellen verwendet werden als bei herkömmlichen Leuchten der genannten Art mit Leuchtdioden oder sonstigen Lichtquellen, da die intrinsischen Streueigenschaften des Gehäuseteils die zunächst gerichtete Lichtemission der Leuchtdioden oder sonstigen Lichtquellen in weitgehend diffuse Lichtstrahlung umwandelt. Dies hat aus Design-Aspekten heraus den Vorteil, daß die Leuchte für die Allgemeinbeleuchtung, der Hauptscheinwerfer, der Blinker beziehungsweise die Rückleuchten für Fahrzeuge oder jede andere erfindungsgemäße Beleuchtungsvorrichtung homogen erleuchtet erscheint, ohne daß die mehreren Lichtquellen getrennt sichtbar sind. In Anwendungen, in denen innerhalb der Beleuchtungsvorrichtung verschiedenfarbige Lichtquellen vorhanden sind, beispielsweise bei integrierten Blink- und Rückleuchten und/oder Hauptscheinwerfern, hat die Verwendung der erfindungsgemäßen Beleuchtungsvorrichtung außerdem den Vorteil, daß die Farbunterschiede bei Tageslicht im nicht eingeschalteten Zustand nicht erkennbar sind. Es ergibt sich also vorteilhaft der von Designern häufig gewünschte einheitliche Eindruck der Beleuchtungsvorrichtung.

Bei der erfindungsgemäßen Beleuchtungsvorrichtung ist die transparente Kunststoffmasse aus der Gruppe der Polycarbonate ausgewählt. Polycarbonate haben den Vorteil, daß sie über besonders günstige Materialeigenschaften verfügen. Insbesondere die Kerbschlagzähigkeit bei tiefen Temperaturen sowie die hohe Temperaturbeständigkeit sind vorteilhaft. Außerdem haben Polycarbonate eine für Spritzgußverfahren besonders gut geeignete Verarbeitungstemperatur. Die Verwendung von Polycarbonaten als Ersatz für Glasmaterialien bei erfindungsgemäßen Beleuchtungsvorrichtungen hat insbesondere den Vorteil einer deutlichen Gewichtsreduzierung. Dies ist dadurch bedingt, daß die Dichte von Polycarbonat um mehr als einen Faktor 2 kleiner ist als jene von Glas. Zudem ist Polycarbonat in den meisten Fällen kostengünstiger als Glas. Besonders geeignet sind ferner sowohl flammgeschützte Polycarbonate als auch Hochtemperatur-Polycarbonate.

Bei der Verwendung von Polycarbonaten als transparente Kunststoffmasse hat sich als besonders vorteilhaft für die Streuelgenschaften erwiesen, daß der Gewichtsanteil der eingelagerten transparenten Streukörper 0,0001 bis 10%, vorzugsweise 1% beträgt und daß die Streukörper eine Größe von ca. 0,1 µm bis 5µm, vorzugsweise 2,5µm haben. Ferner ist es zur Erreichung einer optimalen Homogenisierung des Lichts bezüglich der Abstrahlwinkel günstig, wenn die Größe der Streukörper eine enge Gauß-Verteilung aus verschiedenen Größen aufweist. Als besonders gut geeignet haben sich bi- und multimodale enge Gauß-Vertellungen erwiesen. Besonders gute Streueigenschaften erhält man zudem, wenn die Einschlüsse eine im wesentlichen sphärische Form aufweisen. Bei der Beimischung der Streukörper zu dem Polycarbonat zeigt sich überraschend, daß insbesondere die gewünschten mechanischen Eigenschaften des Polycarbonates erhalten bleiben. Die mechanischen Eigenschaften des Polycarbonates werden also mit Vorteil nicht negativ beeinflußt durch die Beimischung der Streukörper. Die Verwendung von Polycarbonat mit erfindungsgemäß wie oben beschrieben eingelagerten Streukörpern hat ferner den Vorteil, daß bei Tageslicht zum Beispiel ein von Designern als besonders ästhetisch empfundener dunkler Eindruck entsteht, wenn die Lichtquellen nicht eingeschaltet sind. Das Polycarbonat ist darüber hinaus beliebig einfärbbar, sodaß sich farblich beliebige Design-Anforderungen umsetzen lassen.

Gemäß einer speziellen Ausgestaltung der Beleuchtungsvorrichtung ist diese als Leuchte für die Allgemeinbeleuchtung ausgestaltet. Gegenüber herkömmlichen Leuchten für die Allgemeinbeleuchtung, welche gewöhnlich aus Glas bestehen, hat die erfindungsgemäße Beleuchtungsvorrichtung den Vorteil einer um ca. die Hälfte geringen Masse. Außerdem ist eine ausgeführte Leuchte für die Allgemeinbeleuchtung bezüglich der Betriebssicherheit vorteilhaft, da keine Gefahr durch Glassplitter zum Beispiel durch Stöße von außen oder durch Platzen des Leuchtkörpers hervorgerufenen Bruch der Leuchte besteht. Außerdem läßt sich die ausgeführte Leuchte für die Allgemeinbeleuchtung vorteilhaft kostengünstiger herstellen als herkömmliche Leuchten, welche oft aus Glas bestehen. Die Ausgestaltung der Beleuchtungsvorrichtung als Leuchte für die Allgemeinbeleuchtung ist zudem sehr vorteilhaft, da zum Beispiel bei Verwendung von Polycarbonat als Kunststoffelement die ausgezeichnete Formbarkeit dieses Materials die Herstellung nahezu beliebig geformter Leuchten für die Allgemeinbeleuchtung zuläßt. Dadurch kann mit Vorteil optimal auf aktuelle Designtrends auf dem Markt für Leuchten für die Allgemeinbeleuchtung eingegangen werden.

Bei einer nicht beanspruchten Beleuchtungsvorrichtung ist diese als Blinklicht, insbesondere als Blinklicht für Fahrzeuge, insbesondere Kraftfahrzeuge, ausgestaltet. Ein solches Blinklicht ist gegenüber herkömmlichen prismierten oder aus glas hergestellten Blinklichtern vorteilhaft aufgrund der Gewichtsersparnis gegenüber Leuchten aus PMMA oder gegenüber Glasleuchten. Außerdem läßt diese sich kostengünstiger herstellen als konventionelle prismierte und/oder aus PMMA oder Glas bestehende Blinkleuchten. Insbesondere kann mit Vorteil dem auf dem Automobilmarkt zu verzeichnenden Trend zu immer kleineren Blinkerleuchten entsprochen werden, wobei die aufgrund der verkehrsrechtlichen Bestimmungen einzuhaltenden Anforderungen an die gute Erkennbarkeit der Blinkerleuchten aus einem möglichst großen Blickwinkelbereich gleichzeitig mit Vorteil erfüllt werden.

Wenn gemäß der Erfindung die Beleuchtungsvorrichtung als Mehrfachfunktions-Heck- und/oder Frontleuchte für Fahrzeuge, insbesondere Kraftfahrzeuge, ausgestaltet ist, kann mit Vorteil zum Beispiel ein Blinklicht in den Hauptscheinwerfer integriert werden. Dabei läßt sich beispielsweise mit Vorteil selektiv nur das Segment der Mehrfachfunktionsleuchte mit streuendem Material versehen, welcher zum Beispiel das Blinklicht bedeckt, um dieses aufzuweiten, ohne gleichzeitig zum Beispiel das Hauptscheinwerferlicht aufzuweiten. Bei Verwendung unterschiedlich gefärbter Kunststoffe in unterschiedlichen Segmenten der Mehrfachfunktionsleuchte gemäß der Erfindung iassen sich mit Vorteil aktuelle Designanforderungen problemlos umsetzen.

Eine nicht beanspruchte Beleuchtungsvorrichtung kann als Rückleuchte für Fahrzeuge, insbesondere Kraftfahrzeuge, ausgestattet sein. Hier wird bei der Integrierung mehrerer Leuchten, etwa der Blinkerleuchte, der Rückleuchte sowie der Bremsleuchte, innerhalb eines Lampengehäuses eine Reduzierung der für die Homogenisierung der von beispielsweise Leuchtdioden oder Glühlampen oder Entladungslampen emittieren Lichtstrahlung erforderlichen Bauteile mit Vorteil für die Herstellungskosten erreicht. Vorteilhaft bei der Verwendung von Polycarbonaten ist außerdem, daß dieser Werkstoff besonders in der Automobilindustrie zur Fertigung von Lampenabdeckungen bereits sehr verbreitet ist. Daher kann auf eine gesonderte Zulassungsprozedur für diesen Werkstoff in Bezug auf die Verwendung für Scheinwerfergehäuse weitgehend verzichtet werden. Ein schneller Einsatz in der erfindungsgemäßen Beleuchtungsvorrichtung in diesem Bereich ist daher mit großem Vorteil möglich. Die mechanische und thermische Beständigkeit von Polycarbonaten sind insbesondere vorteilhaft bei Verwendung des Werkstoffes für Gehäuseteile von Fahrzeugen zu Land, zu Wasser und in der Luft.

Nach einer anderen nicht beanspruchten Ausführungsform vorgesehen, daß die Beleuchtungsvorrichtung als Hauptscheinwerfer für Fahrzeuge, insbesondere Kraftfahrzeuge, ausgestaltet ist. Besonders, wenn insbesondere bei Kraftfahrzeugen in den Hauptscheinwerfer auch das Blinklicht integriert ist, hat dies den Vorteil, daß die zumeist relativ zu dem Scheinwerfer kleine Lichtquelle zur Erzeugung des Blinklichtes durch Streuung in großflächiges, diffuses Licht umgewandelt wird. Auf diese Weise wird mit großem Vorteil die Erkennbarkeit des Blinklichtes wesentlich verbessert. Außerdem hat die Erzeugung diffuser Lichtstrahlung für das Blinklicht den Vorzug, daß das Blinklicht im wesentlichen aus allen wichtigen Blickwinkeln erkennbar ist. Insbesondere ist eine Erkennbarkeit von der Fahrzeugseite besonders für Fußgänger oder für seitwärtigen Verkehr vorteilhaft für die Verkehrssicherheit. Dadurch, daß die Scheinwerferabdeckung zugleich die Eigenschaften des Scheinwerfergehäuses sowie die einer Streuplatte integriert, ist zudem der Blick auf die Innenkomponenten des Scheinwerfers, insbesondere auf Linsen im Innern des Scheinwerfers, nicht möglich. Dies hat den Vorteil einer geringeren Anziehungskraft für Vandalismus.

Bei einer nicht beanspruchten Beleuchtungsvorrichtung ist diese als Werbetafel ausgestaltet. Der Vorteil ist, daß auf diese Weise die bei Werbetafeln gewünschte gleichmäßig homogene Ausleuchtung bei gleichzeitiger Reduzierung der zur Ausleuchtung verwendeten Lichtquellen sichergestellt wird. Insbesondere in Fällen, in denen die Beleuchtung der Werbetafel mit einer Matrix von Leuchtdioden erfolgt, kann die Anzahl der Leuchtpixel durch die streuende Eigenschaft des erdfindungsgemäßen Gehäusematerials mit großem Kostenvorteil verringert werden. Die Integrierung der streuenden Funktion direkt in das Gehäuseteil führt vorteilhaft zu einem sehr einfachen Aufbau der Werbetafel. Wenn eine Werbetafel nach der Erfindung zum Ersatz einer herkömmlichen Werbetafel aus PMMA oder ähnlichem Material verwendet wird, wird mit Vorteil eine Gewichtsreduktion erreicht. Außerdem ist im Falle von Bruch der Werbetafel - zum Beispiel durch Vandalismus - ein wesentlich geringeres Sicherheitsrisiko zu befürchten dadurch, daß Polycarbonat nicht zersplittert.

Die nicht erfindungsgemäße Beleuchtungsvorrichtung ist entsprechend einer Weiterbildung der Erfindung als Raumleuchte ausgestaltet. Hierdurch kann mit Vorteil die vielfach insbesondere von Innenarchitekten gestellte Forderung, mit möglichst wenig Lichtquellen eine gleichmäßige, diffuse Ausleuchtung eines Raumes zu erreichen, besonders kostengünstig erfüllt werden. Dadurch, daß die Erzeugung diffusen Lichtes intrinsisch innerhalb des Gehäuses der Raumleuchte erfolgt, sind keine weiteren optischen Einrichtungen innerhalb der Raumleuchte erforderlich. Hierdurch wird die Komplexität bei der Fertigung vorteilhaft erheblich verringert. Da sich durch die homogene Verteilung der von den Lichtquellen emittierten Lichtstrahlung die Anzahl der benötigten Lichtquellen, insbesondere Glühlampen oder auch Leuchtdioden, verringern läßt, ergibt sich außerdem der Vorteil, daß die Betriebskosten einer erfindungsgemäßen Raumleuchte besonders niedrig sind.

Eine weitere nicht beanspruchte Beleuchtungsvorrichtung ist als Innenbeleuchtung für Fahrzeuge, insbesondere Kraftfahrzeuge, ausgestaltet ist. Dadurch, daß die Innenbeleuchtung aufgrund seiner streuenden Eigenschaften im wesentlichen diffuses Licht erzeugt, wird mit Vorteil eine Innenbeleuchtung angegeben, welche eine unerwünschte Blendwirkung für den Fahrer, wie sie häufig bei Innenraumleuchten mit gerichteter Lichtstrahlung auftritt, weitestgehend ausschaltet. Da die Lichtstreuung durch die intrinsischen optischen Eigenschaften des Gehäuses einer gemäß dieser Variante der Erfindung ausgestalteten Innenbeleuchtung für Fahrzeuge gewährleistet ist, kann auf eine herstellungstechnisch aufwendige und optisch aus Design-Überlegungen oft unerwünschte Prismierung oder ähnliche plastische Oberflächenstrukturierung verzichtet werden. Dadurch können vorteilhaft die Herstellungskosten reduziert werden. Diese Variante eignet sich auch gut für den Einsatz als Ambientebeleuchtung in Innenräumen oder in der Passagierkabine in Flugzeugen.

Eine andere nicht beanspruchte Ausführungsform sieht vor, daß die Beleuchtungsvorrichtung als Notschalterbeleuchtung ausgestaltet ist. Dabei kann aufgrund der nahezu beliebigen Formbarkeit des Kunststoffmaterials die Beleuchtungsvorrichtung mit Vorteil für die verschiedensten Arten von Notschaltern eingesetzt werden, wobei die Notschalter auf solche Weise beleuchtet sind, daß diese einerseits eine Signalfunktion, andererseits aber auch eine Beleuchtungsfunktion erfüllen. So kann mit großem Vorteil zum Beispiel die Markierung von Notausgängen in Gebäuden, Industrieanlagen, auf Schiffen oder in Flugzeugen mit dem erfindungsgemäßen Notschalter ausgeführt werden. Dabei ist von besonderem Vorteil, daß durch das diffuse Licht die Beleuchtung von einem großen Blickwinkel aus erkennbar ist, wodurch die Sicherheit erhöht wird. Gerade im Bereich der Notschalter ist zudem von großer Bedeutung, daß kein Glas zum Einsatz kommt, durch welches zum Beispiel durch Bruch im Gefahrfalle eine zusätzliche Gefahrenquelle eingebracht werden könnte.

Die der Erfindung zugrundeliegende Aufgabe wird außerdem besonders wirkungsvoll gelöst durch einen Kunststoff mit eingebettetem Licht-Streumittel, bei dem Polycarbonat-Acrylnitril-Butadien-Styrol (PC-ABS) als Kunststoff gewählt ist.

Dieser Stoff hat zur Lösung der Aufgabe die vorteilhafte Eigenschaft, daß er einerseits galvanisierbar ist und andererseits zugleich eine stark lichtstreuende Eigenschaft aufweist. Durch die Galvanisierbarkeit ist sichergestellt, daß auf die Oberfläche des Stoffes gemäß den einschlägigen bekannten Verfahren eine Metallbeschichtung, beispielsweise eine Verchromung, haftend aufbringbar ist. Durch die Einlagerung von ABS erhält der Stoff dabei aufgrund der höheren Lichtstreuung überraschend eine bessere Transmission. Dies ist vor allem deshalb überraschend, da Butadien bekanntlich für sich genommen eine überwiegend lichtabsorbierende Eigenschaft hat.Die Erfindung wird in einer bevorzugten Ausführungsform unter Bezugnahme auf eine Zeichnung beispielhaft beschrieben.

Die Zeichnung zeigt im Einzelnen:
- Fig. 1:: schematische Darstellung einer Leuchte für die Allgemeinbeleuchtung
- Fig. 2:: schematische Darstellung einer anderen Leuchte für die Allgemeinbeleuchtung
- Fig. 3:: schematische Darstellung einer erfindungsgemäßen Mehrfachfunktions-Heckleuchte
- Fig. 4:: schematische Darstellung der Anordnung von Blinkleuchten an einem Kraftfahrzeug
- Fig. 5:: schematische Darstellung eines Rücklichtes mit mehreren Leuchtdioden als Lichtquellen

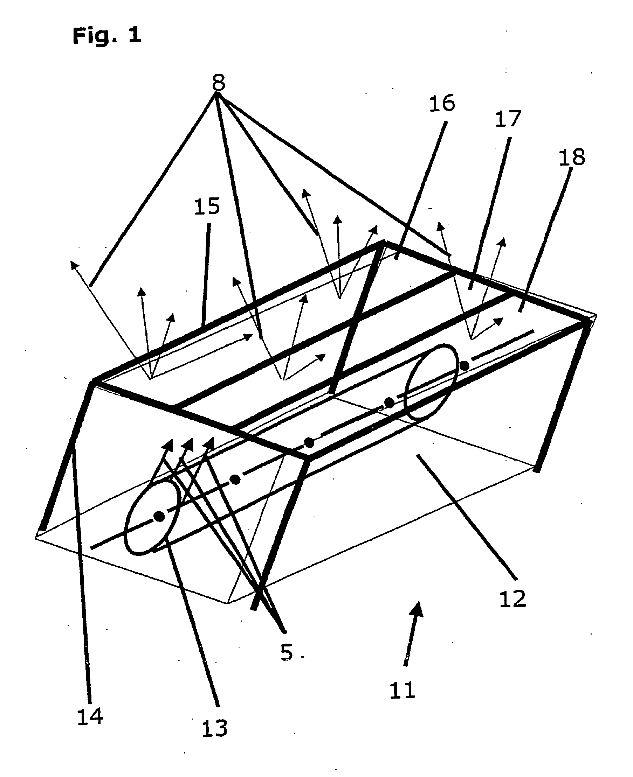

In der Figur 1 ist schematisch eine längliche Leuchte für die Allgemeinbeleuchtung 11 dargestellt. Im Innenraum 12 der Leuchte für die Allgemeinbeleuchtung 11 befindet sich die Lichtquelle 13. Die Lampenabdeckung 14 der Leuchte für die Allgemeinbeleuchtung 11 ist quaderförmig geformt und ist aus Polycarbonat unter Beimischung von kugelförmigen Streukörpern hergestellt. Aufgrund der hervorragenden Formbarkeit von Polycarbonat, dessen mechanischen Eigenschaften durch die Beimischung der Streukörper nicht beeinflußt wird, ist außer der exemplarisch dargestellten Quaderform im Rahmen der Erfindung nahezu jede beliebige andere Formgebung möglich. Die quaderförmige Lampenabdeckung 14 ist an der Oberseite 15 in drei Segmente 16, 17, 18 unterteilt. Dabei bestehen die Segmente jeweils aus Polycarbonat mit unterschiedlicher Färbung. Die Lichtquelle 13 emittiert im wesentlichen gebündelte Lichtstrahlung 5. Die gebündelte Lichtstrahlung 5 wird in der aus Polycarbonat mit eingelagerten Streukörpern bestehenden Lampenabdeckung 14 in diffuse Lichtstrahlung 8 umgewandelt. Auf diese Weise ist eine Leuchte für die Allgemeinbeleuchtung 14 angegeben, welche nahezu beliebige Form aufweisen kann, durch welche das im wesentlichen gerichtete Licht 8 der Lichtquelle 13 in homogene, diffuse Lichtstrahlung 8 umgewandelt wird. Außerdem wird das Weißlicht der Lichtquelle 13 in einer Farbe abgestrahlt, welche segmentweise verschieden sein kann.

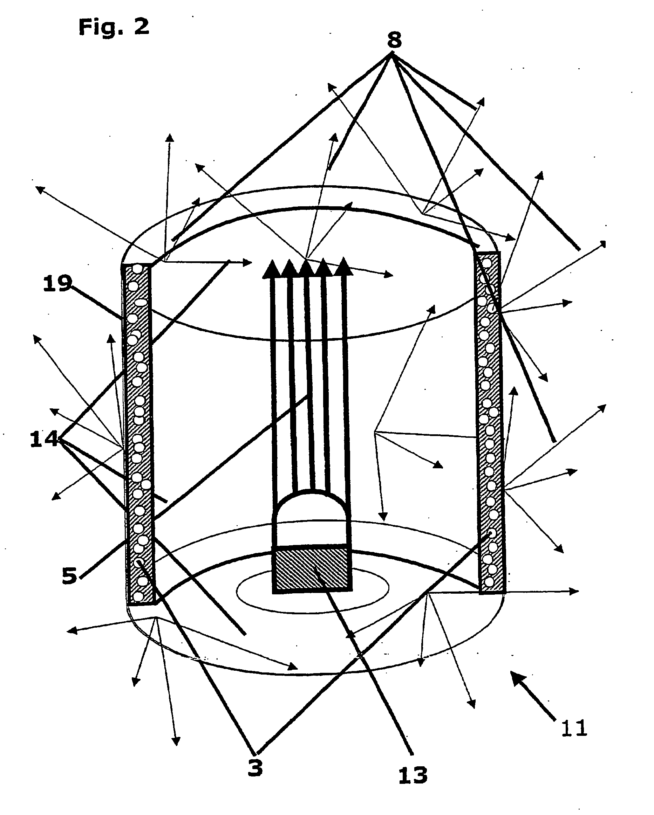

In der Figur 2 ist schematisch eine andere Leuchte für die Allgemeinbeleuchtung 11 mit einer Lichtquelle 13 zu erkennen, welche sich in der Lampenabdeckung 14 befindet. Die Leuchte 11 ist dabei im Teilschnitt dargestellt. Die Lampenabdeckung 14 umschließt die Lichtquelle 13 in seitlicher Richtung ringförmig in Form einer Zylindermantelfläche sowie deckelartig an der Ober- und Unterseite. Die Lampenabeckung 14 ist zudem aus Polycarbonat unter Beimischung von kugelförmigen Streukörpern 3 hergestellt. Die Lichtquelle 13 emittiert wiederum im wesentlichen gebündelte Lichtstrahlung 5. Im Innern der Lampenabdeckung 14 wird die gebündelte Lichtstrahlung 5 an den Streukörpern 3 mehrfach gestreut und auf diese Weise in diffuse Lichtstrahlung 8 umgewandelt. Zusätzlich wird durch die Lichtleiterwirkung der aus Polycarbonat mit beigemischten Streukörpern 3 bestehenden Lampenabdeckung das Licht über die gesamte Außenfläche 19 der Lampenabdeckung 14 diffus abgestrahlt.

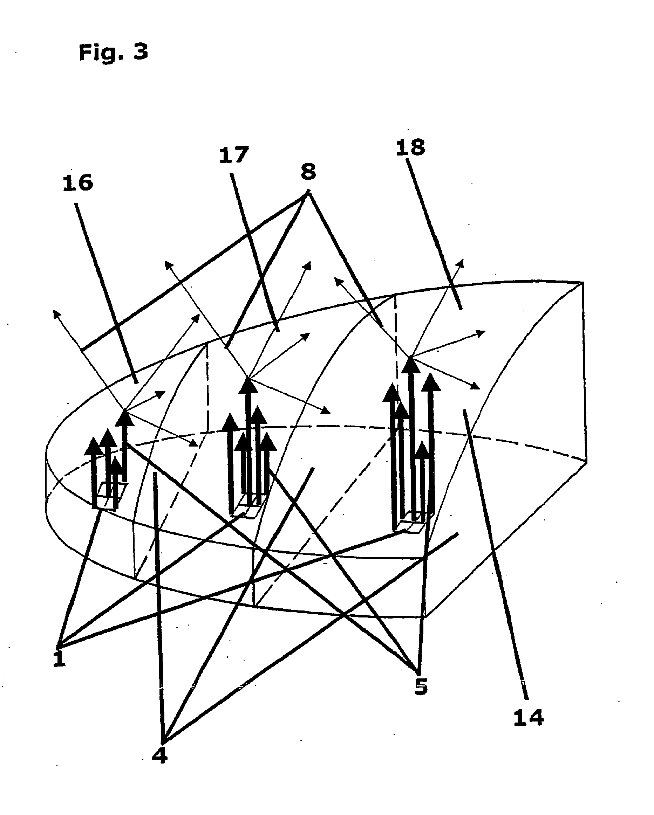

In der Figur 3 ist schematisch die Außenseite einer Mehrfachfunktions-Heckleuchte für Kraftfahrzeuge dargestellt. Die Leuchtenabdeckung 14 ist in die Segmente 16, 17, 18 unterteilt und besteht aus Polycarbonat unter Beimischung von kugelförmigen Streukörpern. Das Segment 16 ist aus rot gefärbtem Polycarbonat gefertigt, das Segment 17 aus gelb gefärbtem Polycarbonat, das Segment 18 aus transparentem, nicht eingefärbtem Polycarbonat. Im Innern des Gehäuses 4 der Mehrfachfunktions-Heckleuchte befinden sich drei Leuchtdioden 1, die jeweils einem der Segmente 16, 17, 18 zugeordnet sind. Jede der Leuchtdioden 1 emittiert gebündelte Lichtstrahlung 5. Die gebündelte Lichtstrahlung wird von den Streukörpern, welche dem gesamten Volumen des Gehäuses 4 beigemischt sind, mehrfach gestreut und tritt als diffuse Lichtstrahlung 8 aus der Leuchtenabdeckung 14 in den Segmenten 16, 17, 18 aus.

Durch die Erfindung ist eine Mehrfachfunktions-Heckleuchte angegeben, bei welcher das rot eingefärbte Segment 16 die Funktion des Rücklichts hat, das gelb eingefärbte Segment 17 die Funktion eines Blinklichtes sowie das nicht eingefärbte Segment 18 die Funktion eines Rückscheinwerfers beim Rückwärtsfahren hat. Dabei ist durch die Mehrfachstreuung des Lichtes im Innern der Leuchtenabdeckung 14 sichergestellt, daß das Licht von verschiedenen Blickwinkeln aus gut zu erkennen ist und zudem jedes der Segmente 16, 17, 18 flächig ausgeleuchtet ist..

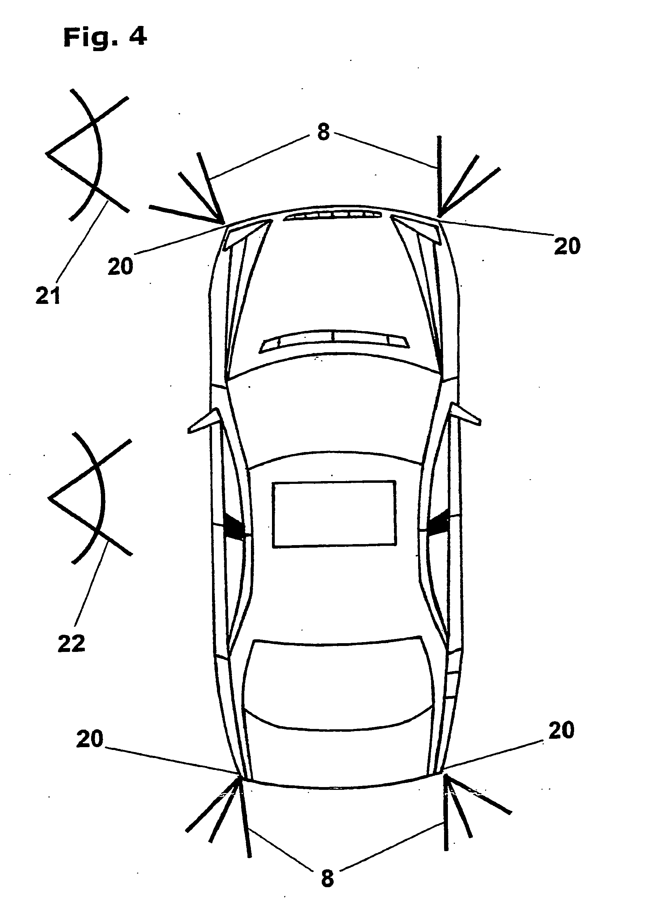

Die Figur 4 zeigt schematisch die Anordnung von Blinklichtern 20 an einem Kraftfahrzeug. Die aus Polycarbonat mit eingelagerten Streukörpern gefertigten Blinklichter 20 emittierten diffuse Lichtstrahlung 8. Die von jedem Blinklicht 20 emittierte diffuse Lichtstrahlung 8 kann sowohl von dem Beobachter 21 als auch von dem Beobachter 22 Blinklicht 20 gut erkannt werden, obwohl die Beobachter 21, 22 das Blinklicht 20 aus stark unterschiedlichen Blickwinkeln betrachten.

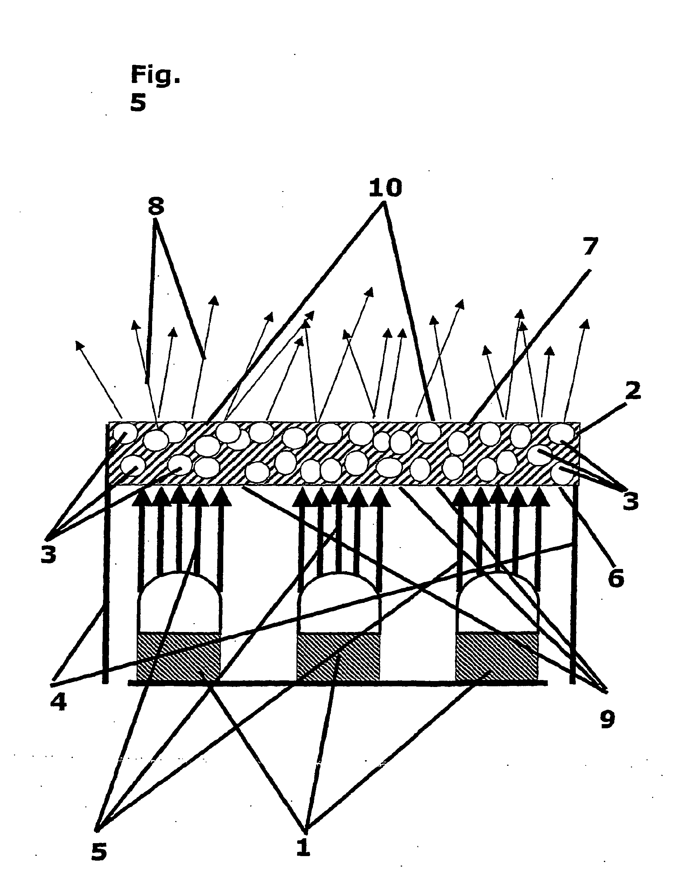

In der Figur 5 ist eine Bremsleuchte zu erkennen, welche drei Leuchtdioden 1 umfaßt. Die Leuchtdioden 1 befinden sich innerhalb einer Abdeckscheibe 2 der Bremsleuchte. Die Abdeckscheibe 2 ist aus Polycarbonat unter Beimischung von kugelförmigen Streukörpern 3 gefertigt. Die Abdeckscheibe 2 bildet zugleich das Gehäuse 4 der Rückleuchte.

Beim Betrieb der Rückleuchte emittiert jede der Leuchtdioden 1 im wesentliche gebündelte Lichtstrahlung 5. Die gebündelte Lichtstrahlung 5 jeder der Leuchtdioden 1 trifft auf die Innenseite 6 der Abdeckscheibe 2. Die gebündelte Lichtstrahlung 5 trifft dabei nicht auf die unbeleuchteten Flächenabschnitte 9 der Innenseite 6 der Abdeckscheibe 2. Im Innern der Abdeckscheibe 2 der Rückleuchte wird die gebündelte Lichtstrahlung 5 mehrfach an den in das Polycarbon eingelagerten Streukörpern 3 gestreut. An der Außenseite 7 der Abdeckscheibe 2 tritt diffuse Lichtstrahlung 8 aus. Dabei tritt diffuse Lichtstrahlung 8 über die volle Fläche der Außenseite 7 aus der Abdeckscheibe 2 heraus. Auch die den unbeleuchteten Flächenabschnitten 9 der Innenseite 6 gegenüberliegenden Flächenabschnitte 10 auf der Außenseite 7 der Abdeckscheibe 2 emittieren diffuse Lichtstrahlung 8. Somit konnte bei einer aus überraschend wenigen Bauteilen aufgebauten Rückleuchte eine Emission diffuser Lichtstrahlung 8 aus der gesamten Außenseite 7 der Abdeckscheibe 2 erzielt werden, obwohl die gebündelte Lichtstrahlung 5 der Leuchtdioden 1 die Flächenabschnitte 9 auf der Innenseite 6 der Abdeckscheibe 2 nicht beleuchtet.

### BEZUGSZEICHENLISTE

- 1: Leuchtdiode
- 2: Abdeckscheibe
- 3: Streukörper
- 4: Gehäuse
- 5: gebündelte Lichtstrahlung
- 6: Innenseite
- 7: Außenseite
- 8: diffuse Lichtstrahlung
- 9: Flächenabschnitte
- 10: Flächenabschnitte
- 11: Leuchte für die Allgemeinbeleuchtung
- 12: Innenraum
- 13: Lichtquelle
- 14: Lampenabdeckung
- 15: Oberseite
- 16: Segment
- 17: Segment
- 18: Segment
- 19: Außenfläche
- 20: Blinklicht
- 21: Beobachter
- 22: Beobachter

## Patentansprüche

1. Beleuchtungsvorrichtung mit mindestens einer Lichtquelle und mindestens einem Streumittel, wobei das Streumittel (2) aus mindestens einem streuenden Kunststoffelement (2) besteht, bei dem transparente Streukörper (3) in eine transparente Kunststoffmasse (2) eingebettet sind, wobei sich das Streumittel (2) über mindestens eine oder mehrere Lichtquellen (1) erstreckt, **dadurch gekennzeichnet, daß** das Streumittel (2) als ein äußeres Gehäuseteil (4) der Beleuchtungsvorrichtung ausgestaltet ist, wobei die Größe der Streukörper (3) eine multimodale enge Gauß-Verteilung aufweist, wobei die transparente Kunststoffmasse (2) aus der Gruppe der Polycarbonate ausgewählt ist, wobei
sie als Mehrfachfunktions-Heck und/oder Frontleuchte für Fahrzeuge, insbesondere Kraftfahrzeuge, ausgestaltet ist.

2. Beleuchtungsvorrichtung nach Anspruch 1, **dadurch gekennzeichnet, dass** die Gauß-Verteilung bimodal ist.

3. Beleuchtungsvorrichtung nach Anspruch 1 oder 2, **dadurch gekennzeichnet, daß** die transparente Kunststoffmasse (2) eingefärbt ist.

4. Beleuchtungsvorrichtung nach einem der Ansprüche 1 bis 3, **dadurch gekennzeichnet, daß** das Polycarbonat flammgeschützt und/oder hochtemperaturbeständig ist.

## Claims

1. Illumination device having at least one light source and at least one scattering means, the scattering means (2) comprising at least one scattering plastic element (2) in the case of which transparent scattering bodies (3) are embedded in a transparent plastic material (2), scattering means (2) extending over at least one or more light sources (1), **characterized in that** the scattering means (2) is configured as an outer housing part (4) of the illumination device, the size of the scattering bodies (3) exhibiting a narrow multimodal Gaussian distribution, the transparent plastic material (2) being selected from the group of polycarbonates, wherein
it is configured as a multifunctional rear and/or front light for vehicles, in particular motor vehicles.

2. Illumination device according to Claim 1, **characterized in that** the Gaussian distribution is bimodal.

3. Illumination device according to Claim 1 or 2, **characterized in that** the transparent plastic material (2) is dyed.

4. Illumination device according to one of Claims 1 to 3, **characterized in that** the polycarbonate is flameproofed and/or stable at high temperatures.

## Revendications

1. Dispositif d'éclairage avec au moins une source de lumière et au moins un moyen de diffusion, le moyen de diffusion (2) consistant en au moins un élément plastique diffuseur (2), dans lequel des corps de diffusion transparents (3) sont incorporés dans une masse plastique transparente (2), le moyen de diffusion (2) s'étendant sur au moins une ou plusieurs sources de lumière (1), **caractérisé par le fait que** le moyen de diffusion (2) se présente sous forme d'un élément de boîtier extérieur (4) du dispositif d'éclairage, la grandeur des corps de diffusion (3) présentant une distribution gaussienne étroite multimodale, la masse plastique transparent (2) en étant une appartenant au groupe des polycarbonates, le dispositif se présentant sous forme de feu arrière et/ou avant multifonction pour véhicules, en particulier pour camions.

2. Dispositif d'éclairage selon la revendication 1, **caractérisé par le fait que** la distribution gaussienne est bimodale.

3. Dispositif d'éclairage selon la revendication 1 ou 2, **caractérisé par le fait que** la masse plastique transparente (2) est colorée.

4. Dispositif d'éclairage selon l'une des revendications 1 à 3, **caractérisé par le fait que** le polycarbonate est à retardement de flamme et/ou résistant à hautes températures.
